# FASCICULE DE BREVET EUROPEEN

(11) **EP 3 021 711 B1**
(45) Date de publication et mention de la délivrance du brevet: **14.02.2018**
(21) Numéro de dépôt: 14767108.5
(22) Date de dépôt: 16.07.2014
(51) Int. Cl.: A45F 3/04

(54) **SYSTEME PORTABLE DE DISTRIBUTION DE FLUIDES POUR ANIMAUX**
TRAGBARES SYSTEM ZUR AUSGABE VON FLÜSSIGKEITEN FÜR TIERE
PORTABLE SYSTEM FOR DISPENSING FLUIDS FOR ANIMALS

(30) Priorité: 19.07.2013 FR 1357148
(43) Date de publication de la demande: 25.05.2016
(73) Titulaire: VIRBAC, 06516 Carros (FR)
(72) Inventeur: BORDE, Charles, F-06700 Saint Laurent du Var (FR); ROBIN, Michel, F-06600 Antibes (FR)
(74) Mandataire: Gevers & Orès
(86) Numéro de dépôt international: PCT/IB2014/063153
(87) Numéro de publication internationale: WO 2015/008237

(56) Documents cités:
- WO-A2-2004/014461
- WO-A2-2009/105674
- DE-U1- 9 311 999
- US-A1- 2004 000 570
- US-A1- 2013 075 410

## Description

La présente invention concerne un système de distribution portable pour l'administration de fluides destinés aux animaux, en particulier au bétail.

Ces fluides sont notamment des médicaments liquides qui sont déposés directement sur les animaux, sur une ligne du dos qui va des épaules à la croupe. Cette administration est classiquement dénommée « pour-on ».

De nombreux dispositifs de ce type ont déjà été proposés.

Ainsi, on connaît des flacons rigides comprenant une partie formant réservoir et une partie formant zone de mesure de la dose de médicament à administrer.

Ils doivent être retournés pour verser le produit sur l'animal, ce qui entraîne des risques de chute du fait d'une mauvaise manipulation et donc de détérioration du flacon et du produit qu'il contient.

Ces flacons permettent un dosage satisfaisant du médicament.

Cependant, ils ne peuvent contenir qu'une quantité limitée de produit, souvent insuffisante pour traiter en une seule opération un nombre important d'animaux. Dans le cas contraire, leur poids rendrait leur manipulation malaisée.

C'est pourquoi, des systèmes ont été proposés pour rendre les récipients portables.

Ainsi, un récipient rigide, tel qu'un bidon ou un réservoir généralement en matière plastique, peut être accroché en bandoulière ou bien sur le dos de l'utilisateur par un système de sangles qui entoure le récipient ou en positionnant le bidon dans un sac à dos.

Le brevet EP-0411858 décrit quant à lui un réservoir en plastique comportant des parties en saillie formant des fentes pour le passage d'une ceinture.

Un tel réservoir peut donc être porté par un utilisateur en fixant la ceinture autour de sa taille.

Pour tous ces dispositifs placés sur le dos de l'utilisateur ou autour de sa taille, il est nécessaire de prévoir un système pour délivrer les fluides présents dans le récipient.

En général, un tube d'alimentation flexible est fixé au niveau de l'orifice de distribution du réservoir, ce tube étant lui-même raccordé à un pistolet applicateur qui est une pompe doseuse.

Pour que la totalité du liquide présent dans le récipient soit distribuée, il est généralement prévu que l'orifice de distribution, qui est aussi l'orifice de remplissage du réservoir, soit positionné vers le bas afin que le fluide s'évacue par gravité. Le renversement du réservoir entraîne des manipulations qui peuvent entrainer des fuites de produit par exemple si la fixation du tube flexible à l'orifice de distribution est défectueuse.

Alternativement, lorsque l'orifice de distribution du réservoir est positionné vers le haut, un tube plongeur relié au tube d'alimentation du flexible est placé à l'intérieur du récipient afin que le fluide soit collecté au niveau de la partie la plus basse du réservoir, faute de quoi la pompe aspire de l'air et le dosage du médicament est mis en péril.

Ces dispositifs présentent l'avantage de pouvoir transporter un volume plus important de fluides, correspondant au poids que l'opérateur est susceptible de porter sur le dos, c'est-à-dire des volumes pouvant aller jusqu'à plusieurs litres de composition médicamenteuse. Ceci est important lorsque le bétail est en plein champ car cela évite en particulier à l'opérateur d'interrompre souvent le traitement des animaux pour remplacer un réservoir vide et par exemple de perdre de vue les animaux déjà traité et ceux qui doivent encore l'être.

Ces dispositifs présentent cependant de nombreux inconvénients.

En effet, lorsque l'utilisateur porte le récipient en bandoulière, la position de transport de poids importants n'est pas confortable. Il est ainsi conduit à prendre et reposer le récipient plusieurs fois durant le traitement du troupeau. Ces manipulations peuvent conduire à l'arrachement du tuyau et donc à des risques de contact avec le produit qui peut être toxique pour l'utilisateur ou pour l'environnement ou encore à des chutes.

De plus, ces récipients en plastique rigide présentent un poids et un encombrement importants, ce qui a un impact négatif sur la praticité de l'application du médicament ainsi que sur leur coût de fabrication et de transport.

Ils génèrent également une grande quantité de déchets plastiques qui occupent des volumes très importants.

Enfin, une mauvaise manipulation des sangles d'accrochage des bidons peut entraîner une chute du récipient. Ceci conduit généralement à la dispersion du médicament, du fait de la rupture du bouchon ou du récipient.

On pourra enfin se référer au document DE 93 11 999 U1 qui divulgue un dispositif selon le préambule de la revendication 1.

L'invention a pour objet de pallier ces inconvénients en proposant un dispositif de distribution portable pour l'administration de fluides pour les animaux dont l'utilisation est simple et sans risque et qui limite la perte de produit ainsi que les déchets plastiques.

Ainsi, ce dispositif comporte un sac à dos avec un compartiment principal délimité par une paroi dorsale destinée à venir en contact avec le dos d'un utilisateur, une paroi extérieure agencée de manière opposée à la paroi dorsale et une paroi latérale reliant les parois dorsale et extérieure, ainsi qu'une poche souple contenant le fluide à administrer, placée dans ledit compartiment principal, dans lequel au moins la partie de la paroi extérieure du sac à dos en regard de ladite poche est réalisée en une matière rigide pour former une protection anti-chocs et la poche est fixée de manière amovible à la paroi dorsale par au moins un moyen de fixation pour assurer la verticalité de la poche dans le sac à dos lorsque celui-ci est transporté sur le dos de l'opérateur ou lorsqu'il est posé au sol.

La poche peut être retirée et remplacée très facilement par une nouvelle poche après usage et constitue donc un élément consommable du dispositif alors que le sac est un élément permanent.

La poche souple comprend quatre pièces, des faces avant et arrière et deux soufflets latéraux de chaque côté de la poche. Le même matériau constitue généralement les quatre éléments, un matériau plastique souple, dont la structure, qui peut être un simple PEBD mais le plus souvent un multicouche, assure la protection du contenu. De telles poches, dont la taille des faces avant et arrière correspond à la largeur et à la hauteur du sac à dos, peuvent alors être remplies avec différentes quantités de fluide tant que l'ouverture des soufflets correspond à une extension latérale de la poche inférieure à la largeur de la paroi latérale reliant les parois dorsale et extérieure du sac à dos.

La partie de la paroi extérieure du sac à dos en regard de la poche est rigide et évite que le sac à dos ne s'avachisse ou ne s'aplatisse.

De façon préférée, la paroi latérale reliant les parois dorsale et extérieure est aussi réalisée dans une matière rigide, en particulier dans la partie basse reposant au sol lorsque le sac à dos est posé par terre. De manière encore plus préférée, c'est l'ensemble du sac à dos qui est réalisé en une matière rigide anti-chocs.

Il est important d'assurer la verticalité de la poche amovible contenue dans le sac à dos afin d'éviter que, lors de l'utilisation, la poche qui se vide ne se tasse sur elle-même, ce qui peut contribuer à gêner la bonne évacuation du fluide résiduel contenu dans la poche. Il a été observé que l'absence d'obstacles à la verticalité et à l'aplatissement de la poche est un élément important qui garantit une meilleure vidange de la poche. Aussi, des systèmes de fixation amovible sont-ils prévus sur la paroi dorsale du sac à dos pour la fixation et le maintien de la poche contre la paroi dorsale. Ces systèmes de fixation sont des sangles, des scratchs, des lacets, des élastiques ou tout moyen équivalent permettant de maintenir la poche verticalement contre la paroi dorsale du sac à dos et d'éviter qu'elle ne se tasse sur elle-même lorsqu'elle se vide. Alternativement, on peut prévoir que systèmes de fixation sont des sangles, des scratchs, des lacets, des élastiques ou tout moyen équivalent permettant de maintenir la poche verticalement contre la paroi dorsale du sac à dos et d'éviter qu'elle ne se tasse sur elle-même lorsqu'elle se vide. Alternativement, on peut prévoir que la poche comprenne dans sa partie supérieure des oeillets de fixation qui peuvent être raccordés à des crochets ou des boutons situés en regard de ces oeillets sur la partie haute de la paroi dorsale du sac à dos.

De façon préférée, un système de sangles est prévu sur la paroi dorsale du sac à dos pour la fixation de la poche contre la paroi dorsale.

La poche comprend au moins un orifice délimité par une embase, de manière avantageuse avec un insert en facial, c'est-à-dire sur la face avant de la poche, ce qui facilite l'accès à cet orifice lorsque la poche est ouverte.

Avantageusement, l'orifice délimité par l'embase est situé à proximité du fond du sac à dos. Il comporte un clapet anti-retour et un système de raccordement destiné à être raccordé à un tube flexible pour la distribution du fluide.

De manière particulièrement avantageuse, le système de raccordement est coudé à 90° et libre de rotation. Ceci permet le cas échéant de ranger le tube flexible encore raccordé à l'intérieur du sac à dos en l'enroulant sans perte de place.

La poche peut également comporter un deuxième orifice, situé à l'opposé du premier, dans la partie haute de la poche, cet orifice étant délimité par une embase et fermé par un bouchon, des moyens étant prévus sur la paroi dorsale du sac à dos pour suspendre la poche par coopération entre le bouchon et/ou l'embase et ces moyens. Dans un dispositif préféré selon l'invention, ce deuxième orifice délimité par une embase comporte un insert en facial, c'est-à-dire sur la face avant de la poche.

Cette poche est, de préférence, du type airless, c'est-à-dire qu'elle contient un produit fluide sous vide, injecté sous pression sans injection d'air et qui ne permet pas de reprise d'air lorsque le fluide est expulsé par la pompe. Ce système est avantageux pour garantir la bonne stabilité physique et chimique des éléments d'intérêt et des principes actifs contenus dans le fluide alors qu'une même poche peut être utilisée à différents moments sur une longue période de temps.

Avantageusement, la poche selon le dispositif de l'invention contient un produit à usage vétérinaire.

De façon avantageuse, la poche ainsi que le produit fluide qu'elle contient peuvent être stérilisés par irradiation gamma, selon les normes de stérilisation pharmaceutiques, par exemple entre 15 et 50 kGray, plus particulièrement entre 25 et 45 kGray. Ceci est particulièrement utile si le fluide est destiné à une administration parentérale d'un médicament à usage vétérinaire.

Lorsque la poche est composée de quatre pièces, des faces avant et arrière avec deux soufflets latéraux de chaque côté de la poche, il a été constaté qu'elle est d'autant plus fragile que le volume du fluide contenu dans la poche est important. Par exemple, des tests de chutes de poches ont montré que les soudures des pièces les unes avec les autres et les soudures au niveau des embases pouvaient céder, ce qui présente un risque de contamination de l'opérateur et de l'environnement et de perte de produit si l'opérateur, qui remplace une poche vide par une poche pleine dans le sac à dos, laisse choir la poche. Il a été constaté que la mise en place de points de liaison entre les faces internes des soufflets, à l'extérieur de la poche, sur les parties haute et basse de la poche présente l'intérêt de constituer des zones de fragilité préférentielle, ou zones de rupture préférentielle, en cas de chute, sans nuire au remplissage de la poche. Par ailleurs, ces points de liaison qui rendent solidaires les extrémités haute et basse des soufflets contribuent avantageusement à la vidange et à l'aplatissement des poches en formant un entonnoir vers les embases dans la partie basse de la poche. La poche composée de quatre pièces comporte au moins une zone de rupture préférentielle dans la partie basse de la poche qui comporte une embase. Les zones de rupture préférentielle ont une forme oblongue. Le grand axe de chacune desdites zones est orienté sensiblement perpendiculairement à un rayon passant par le centre de la poche et coupant cet axe.

De façon particulièrement avantageuse, la poche est composée de quatre pièces et comporte au moins quatre zones de rupture préférentielles de forme oblongue dans chaque coin de la poche.

Enfin, un compartiment secondaire peut être prévu dans le compartiment principal au niveau du fond du sac à dos, dans lequel est placée ladite poche. Ce compartiment secondaire, préférentiellement étanche, joue le rôle de bac de rétention dans le cas où surviendrait une fuite du fluide contenu dans la poche, afin que l'opérateur ne soit pas souillé par du fluide.

L'invention sera mieux comprise et d'autres buts, avantages et caractéristiques de celle-ci apparaîtront plus clairement à la lecture de la description qui suit et qui est faite au regard des dessins annexés, sur lesquels :
- la figure 1 est une vue de côté d'un dispositif selon l'invention, montrant le sac en coupe,
- la figure 2 est une vue de côté montrant les deux éléments constitutifs du dispositif, le sac à dos étant ouvert,
- la figure 3 est une vue de face de la partie dorsale du sac à dos illustrant les moyens de fixation de la poche,
- la figure 4 est une vue en plan d'une poche souple destinée à être fixée dans le sac à dos illustré aux figures 1 à 3,
- la figure 5 est une vue en coupe selon la ligne A-A' de la figure 4 et
- la figure 6 est une vue en coupe selon la ligne B-B' de la figure 4.

Les éléments communs aux différentes figures seront illustrés par les mêmes références.

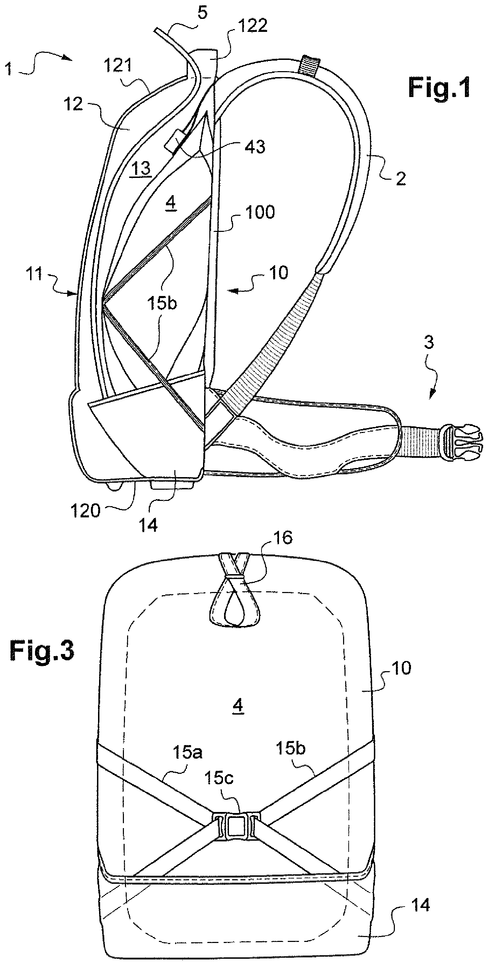

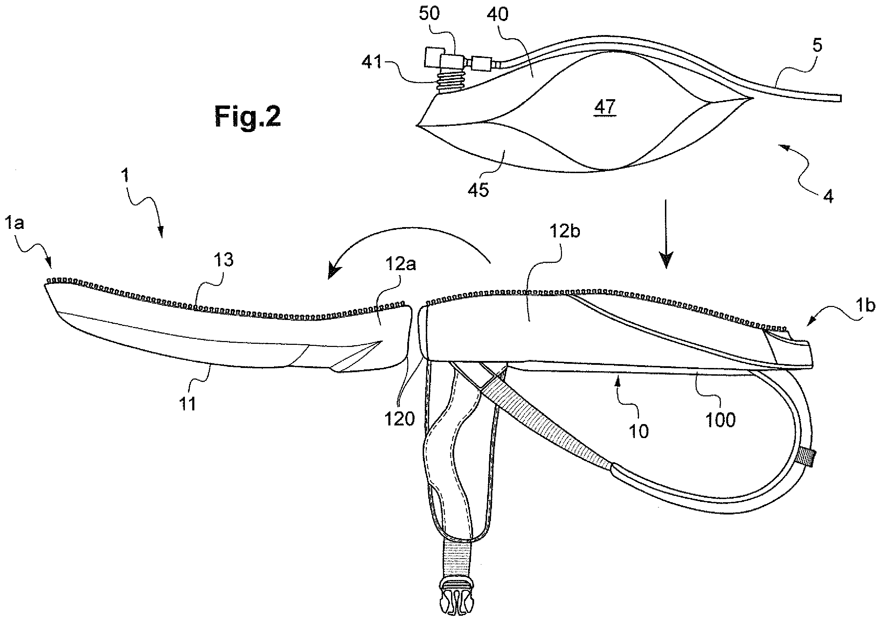

Les figures 1 et 2 montrent un sac à dos 1, ce sac à dos étant en position fermée sur la figure 1 et en position ouverte sur la figure 2.

Il comporte une paroi dorsale 10, une paroi extérieure 11, située à l'opposé de la paroi dorsale lorsque le sac est en position fermée, et une paroi latérale périphérique 12 qui relie les parois dorsale et extérieure.

Dans l'exemple illustré sur la figure 2, cette paroi latérale est réalisée en deux parties 12a et 12b qui peuvent être reliées l'une à l'autre par un système de fermeture à glissière 13.

Ainsi, dans ce mode de réalisation, on peut considérer que le sac à dos est réalisé en deux coques 1a et 1b reliées par une fermeture à glissière.

La paroi latérale définit le fond 120 du sac, sur lequel il est destiné à reposer ainsi qu'une face supérieure 121.

Ce sac à dos 1 est muni de bretelles 2 qui sont fixées sur la paroi dorsale 10 du sac à dos, au niveau du fond 120 et de la face supérieure 121 du sac.

La figure 1 montre que le sac à dos comporte également des éléments 3 d'une ceinture, raccordés à la paroi dorsale 10, au-dessus du fond 120.

La face d'extrémité 121 comporte une partie 122 formant poignée pour faciliter la manipulation du sac à dos.

Les parois 10 à 12 du sac 1 définissent un compartiment principal 13.

La figure 1 montre qu'un compartiment secondaire 14, sous la forme d'une poche, peut être prévu sur le fond 120 du sac à dos.

Dans l'exemple illustré à la figure 1, une poche 4 contenant le fluide à administrer est placée dans le compartiment secondaire 14.

De préférence, le compartiment secondaire 14 est étanche aux fluides. Ainsi, en cas d'écoulement inopiné de fluide provenant de la poche, le fluide est retenu dans le compartiment secondaire, ce qui permet de protéger l'utilisateur d'un contact avec le produit.

Cette poche 4 est fixée à la paroi dorsale 10 du sac à dos au moyen de sangles 15a et 15b. Ces sangles sont elles-mêmes fixées à la paroi dorsale du sac à dos.

La figure 3 illustre la paroi dorsale 10 du sac à dos, vue depuis le compartiment principal 13.

Elle montre les sangles 15a et 15b qui peuvent être reliées par un système de connexion 15c.

Ainsi, une fois la poche 4 placée dans le compartiment secondaire 14, la poche 4 peut être fixée contre la paroi dorsale 10, en ajustant les deux sangles 15a et 15b sur la poche et en fermant le système de connexion 15c.

La figure 3 illustre également un moyen de fixation de la poche représenté par une sangle 16, en forme de boucle qui est fixée contre la paroi dorsale 10, à proximité de la face supérieure 121 du sac à dos.

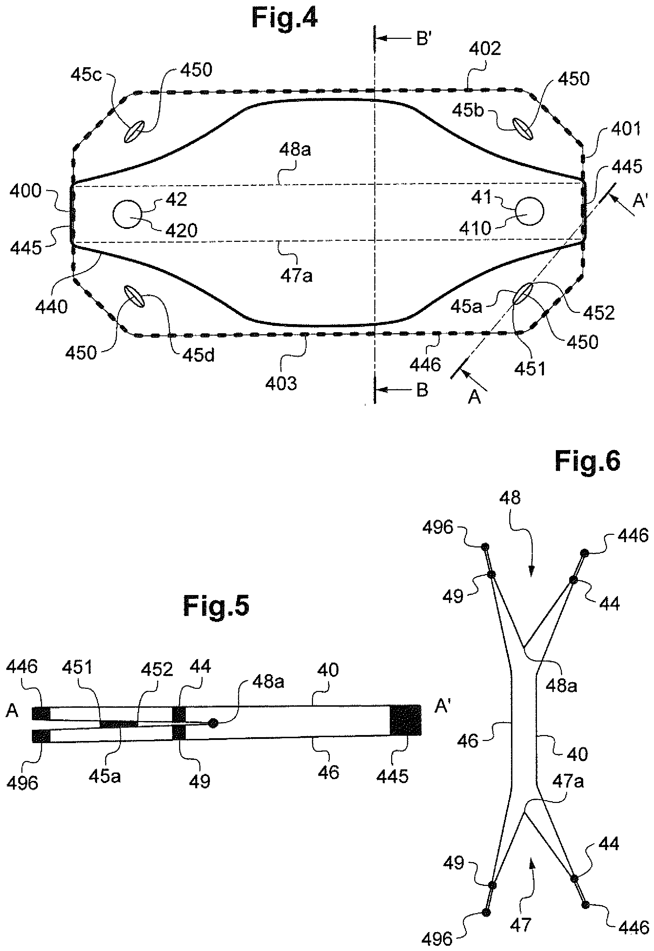

Cette sangle 16 est de préférence réalisée en une matière élastique. Elle est destinée à coopérer avec une embase 42 de la poche qui sera illustrée plus en détail en référence à la figure 4.

Cette sangle 16 contribue à la fixation de la poche 4 sur la paroi dorsale 10. En pratique, la poche 4 est suspendue grâce à cette sangle, ce qui permet de la maintenir en position verticale. Le fluide présent dans la poche s'accumule donc dans la partie basse de la poche, du fait de la gravité.

Il convient de noter que la sangle 16 ou les sangles 15a et 15b permettent de fixer la poche 4 à la paroi dorsale, de manière amovible.

Ceci permet le remplacement de la poche 4 lorsqu'elle est vide.

La figure 1 illustre également un tuyau d'alimentation 5 qui est destiné à être raccordé à un pistolet de distribution (non illustré sur les figures). Le tuyau d'alimentation 5 sort du sac à dos au niveau de la face supérieure 121, dans une ouverture pratiquée au centre, de manière à ce que le sac à dos ne pose pas de problème de latéralité (et soit aussi bien utilisable par les gauchers que par les droitiers). La sortie du tuyau d'alimentation au niveau de la face supérieure participe à limiter les possibilités d'arrachage du tuyau d'alimentation lors de l'utilisation du dispositif, par accrochage inopiné par des branches, par exemple. On peut cependant prévoir une ouverture à droite et/ou à gauche, par exemple sur la paroi 12, étant entendu que cette ouverture doit préférentiellement être située au dessus du compartiment secondaire 14.

De façon générale, les parois 10 et 12 du sac à dos peuvent être réalisées en une matière souple, par exemple une matière textile. Elles peuvent aussi être constituées de différentes matières de rigidité différente.

Il est par exemple avantageux de prévoir un matériau résistant et rigide pour constituer le fond du sac qui sera en contact avec le sol lorsque le sac est posé à terre, sur une étagère ou dans un véhicule.

De plus, pour améliorer le confort de l'utilisateur, des parties en mousse 100 peuvent par exemple être prévues sur la paroi dorsale 10, sur sa face destinée à venir en contact avec l'utilisateur.

La paroi extérieure 11 du sac à dos est constituée d'un matériau lui conférant une rigidité suffisante pour que le sac ne s'affaisse pas sur lui-même et qu'il supporte des agressions et/ou des chocs provenant de l'extérieur. La paroi extérieure comprend donc par exemple une coque réalisée en un matériau beaucoup plus rigide que la matière textile qui peut former le reste du sac.

Cette coque peut être réalisée en une matière synthétique, par exemple en matière plastique thermoformée ou injectée ou en un autre matériau présentant des caractéristiques de rigidité similaires, comme par exemple du fer ou de l'aluminium embouti. On veillera cependant à limiter autant que possible le poids du sac à dos.

Cette coque est prévue au moins sur la partie de la paroi extérieure 11 qui est en regard de la poche 4. De cette manière, la poche 4 est protégée de tout impact qui se produirait sur la paroi extérieure 11, comme des coups de corne et la verticalité de la poche est assurée lorsque le sac à dos est fermé.

Bien entendu, l'ensemble de la paroi extérieure 11 peut également être réalisé sous la forme d'une coque rigide.

De ce fait, la poche 4 est protégée contre d'éventuels chocs pouvant survenir lors de l'utilisation du sac à dos, c'est-à-dire lorsqu'il est placé sur le dos d'un utilisateur.

Par ailleurs, on peut également prévoir de réaliser l'ensemble du sac à dos en une matière rigide.

Ceci permet de protéger la poche 4 contre tout type de chocs, notamment ceux qui peuvent survenir lorsque le sac à dos tombe sur le sol lors de sa manipulation.

Il convient également de noter que la poche 4 est protégée contre les chocs du fait de sa fixation contre la paroi dorsale du sac à dos et son éventuel positionnement dans le compartiment secondaire 14.

En effet, cette fixation limite les mouvements de la poche à l'intérieur du compartiment principal 13, le sac à dos formant alors une enveloppe protectrice, absorbant les chocs sans les transmettre à la poche 4.

Il est maintenant fait référence à la figure 2 qui illustre la mise en place d'une poche 4 dans le sac à dos 1.

Dans l'exemple de réalisation illustré à la figure 2, le sac à dos se compose de deux demi-coques 1a et 1b qui sont, de préférence, réalisées en un matériau rigide.

L'ouverture du sac à dos est obtenue en actionnant la fermeture à glissière 13, ce qui permet d'obtenir une ouverture complète, les deux coques 1a et 1b se situant alors sensiblement dans le même plan.

La poche 4 est alors placée dans la demi-coque 1b, contre la paroi dorsale 10, les sangles 15a et 15b étant détachées l'une de l'autre.

La figure 2 montre que la poche 4 comporte une embase 41 autour d'un orifice de la poche.

Sur cette embase, est fixé un système de raccordement 50 au tube flexible 5.

La poche 4 est positionnée sur la paroi dorsale 10, de telle sorte que l'embase 41 se trouve à proximité du fond 120 du sac à dos.

Ce positionnement de l'embase 41 permet d'assurer la vidange complète de la poche, même en l'absence de tube plongeur. Cette vidange est d'autant mieux assurée que la poche est du type airless, c'est-à-dire contenant un produit sous vide, sans reprise d'air lors de l'utilisation.

Il convient de noter que la mise sous vide permet également d'améliorer la conservation du produit en évitant toute oxydation et d'obtenir un aplatissement de la poche au fur et à mesure de l'administration du produit.

Par ailleurs, la poche est préférentiellement constituée d'un matériau supportant la stérilisation par irradiation gamma. En pratique, si le produit fluide est un médicament stérile, la poche peut être stérilisée préalablement au remplissage par le produit liquide et ce remplissage est alors réalisé sous environnement stérile. En alternative, la stérilisation est réalisée sur la poche remplie.

Une fois la poche 4 positionnée contre la paroi dorsale, les sangles 15a et 15b sont reliées et fixées l'une à l'autre grâce au système de connexion 15c.

Le sac à dos 1 peut alors être fermé et il est prêt à être utilisé, dès lors que le tube flexible est raccordé à un pistolet de distribution.

Il convient de noter que cette ouverture à 180° facilite la mise en place de la poche, comme son retrait une fois qu'elle est vide.

Il est maintenant fait référence à la figure 4 qui illustre une poche composée de quatre pièces, des faces avant et arrière avec deux soufflets latéraux de chaque côté de la poche, vue en plan.

La figure 4 montre la face avant 40 de la poche 4 qui comporte les embases 41 et 42. De manière générale, ces embases se présentent sous la forme d'une pièce cylindrique soudée sur la poche et délimitant un orifice de la poche.

La face avant 40 de la poche présente une forme sensiblement rectangulaire. Les embases 41 et 42 sont situées sur l'axe longitudinal central de la face 40, l'embase 41 étant située à proximité du petit côté 401, tandis que l'embase 42 est située à proximité de l'autre petit côté 400. Les deux embases 41 et 42 sont donc situées à deux extrémités opposées de la poche.

Comme décrit en référence à la figure 2, sur l'embase 41 peut être fixé un système de raccordement au tube flexible.

De façon préférée, cette embase 41 est équipée d'un joint anti-retour placé au niveau de l'orifice 410. De plus, un clapet anti-retour est prévu sur le système de raccordement 50.

Ceci permet d'éviter tout contact entre l'utilisateur et le produit. Ceci évite également que de l'air puisse rentrer dans la poche lorsque le système de raccordement est déconnecté, notamment pour changer le tube flexible ou le pistolet. Enfin, tout risque de rétrocontamination est évité. En effet, un produit extrait de la poche et non administré ne peut pas y retourner. Ceci évite donc une détérioration du produit contenu dans la poche, ce qui est important dans le cas d'un produit pharmaceutique.

L'embase 42 délimite un orifice 420 qui est fermé par un bouchon 43.

L'embase 42 et le bouchon 43 permettent de suspendre la poche à la paroi dorsale 10 du sac à dos au niveau d'un moyen de fixation illustré à la figure 3 par la sangle 16.

L'orifice 420 permet également une utilisation classique de la poche avec par exemple une buse et une pompe volumétrique. Il permet également de réaliser une vidange totale de la poche si un problème survient lors de sa fabrication, alors qu'elle est déjà remplie avec du fluide. Une vidange de la poche peut également se révéler utile si le produit présent dans la poche se révèle inadapté à une utilisation et que l'on souhaite récupérer la poche en vue d'une réutilisation.

La figure 4 montre également que la partie de la poche 4 destinée à contenir le liquide est délimitée par des soudures entre les différentes pièces de la poche. Elles sont schématisées par les lignes 440 et 445.

La figure 6 montre plus précisément la structure de la poche qui comprend, outre la face avant 40, une face arrière 46 et deux soufflets 47 et 48 raccordant les faces avant et arrière. Les plis des soufflets 47a et 48a sont représenté en pointillés sur la figure 4.

La figure 6 illustre ainsi un point 44 de la soudure entre la face avant 40 et les soufflets, et un point 49 de la soudure entre la face arrière 46 et les soufflets. Ainsi, la soudure (référence 445 sur la figure 5) fait intervenir la face avant et la face arrière au niveau des petits côtés 400 et 401 et une face avant ou arrière avec un soufflet (références 44 et 49 sur les figures 5 et 6), sur les grands côtés 402 et 403 de la poche. La figure 6 illustre aussi la soudure 446 en périphérie entre la face avant 40 et les soufflets 47 et 48 et la soudure 496 entre la face arrière 46 et les soufflets 47 et 48.

Par ailleurs, entre la soudure prévue entre la face avant/arrière et les soufflets et la périphérie extérieure de la poche où la face avant et la face arrière sont respectivement soudées aux soufflets, sont prévues au moins une zone de fragilité ou de rupture préférentielle. Elles sont référencées 45a à 45d.

Ces zones de fragilité présentent l'avantage d'assurer une protection de la poche contre les chocs.

En effet, elles absorbent préférentiellement l'énergie provoquée par la chute de la poche et se rompent en lieu et place de la soudure 440 ou des soudures liant les embases à la face avant.

La figure 4 montre que ces zones de fragilité présentent une forme sensiblement oblongue et que le grand axe 450 de chaque zone 45a à 45d est sensiblement perpendiculaire à des rayons partant du centre de la poche et coupant cet axe.

En cas de chute à plat de la poche remplie de liquide, l'onde de choc se propage depuis le centre de la poche dans toutes les directions.

Compte tenu de cette disposition relative du grand axe des zones oblongues, l'onde de choc s'exerce sur toute ta longueur des zones oblongues. Ceci favorise sa dispersion et son absorption, ce qui renforce l'efficacité de ces zones de fragilité.

En pratique, une rupture va effectivement se produire au niveau des zones oblongues 45a à 45d. Cependant, la soudure principale 440 et les soudures liant les embases à la face avant sont protégées de l'onde de choc et ne subissent aucune détérioration. Ces zones constituent ainsi des zones de rupture préférentielle.

En référence à la figure 5, va maintenant être décrit un exemple de réalisation de ces zones de fragilité.

La figure 5 montre le point de soudure 445 entre les faces avant 40 et arrière 46. Le pli du soufflet 48 est matérialisé par le point 48a. Au niveau du point 44 sont soudés la face avant 40 et le soufflet 48 et au niveau du point 49 sont soudés la face arrière 46 et le soufflet 48. Les points de soudures 446 et 496 matérialisent les soudures périphériques entre la face avant 40, la face arrière 46 et le soufflet 48. L'espace pour le fluide se situe entre les points 44, 49 et 445.

La zone de fragilité 45a est ici représentée par une soudure entre les points 451 et 452, entre les deux mêmes faces en vis-à-vis du soufflet 48. Il est aussi avantageux d'éliminer par découpe, par exemple avec un emporte-pièce, les deux faces du soufflet 48 situées entre les points 451 et 452 et de souder, entre les points 451 et 452, les faces avant et arrière 40 et 46.

Ainsi, chaque zone 45a à 45d peut être définie par une ligne de soudure oblongue, ou par une soudure pleine ou par collage ou par tout moyen équivalent de liaison au niveau de laquelle, soit les faces en vis-à-vis du soufflet 47 ou 48, soit les faces avant et arrière sont liées l'une à l'autre.

Ces zones sont moins résistantes que la soudure 440 car elles ne font pas intervenir les soufflets. Lors d'un choc, elles se rompent préférentiellement en absorbant et dissipant l'énergie associée. Puisqu'elles ne délimitent pas l'espace dans lequel se situe le fluide, leur rupture n'entraine pas de fuite.

L'invention n'est pas limitée à ce mode de réalisation des zones de rupture préférentielle.

Dans l'exemple de réalisation illustré sur la figure 4, les zones 45a à 45d sont situées de part et d'autre de chaque embase 41, 42.

Il convient également de noter que ces zones déforment alors la poche lorsqu'elle est pleine, ce qui participe à la bonne vidange de la poche en rétrécissant le volume autour de chaque embase.

Ainsi, ces zones de rupture préférentielle participent, avec la structure du sac à dos, à la protection de la poche pour éviter tout risque de rupture en cas de choc.

Enfin, l'utilisation de poches souples en lieu et place de récipients rigides permet de limiter la quantité de déchets et de réduire les coûts de transport, du fait de la réduction de poids et de volume obtenue.

Le dispositif selon l'invention est particulièrement adapté pour administrer un médicament à usage vétérinaire à du bétail et peut être avantageusement utilisé à cette fin, en particulier pour une application en Pour On sur du bétail.

Les signes de référence insérés après les caractéristiques techniques figurant dans les revendications ont pour seul but de faciliter la compréhension de ces dernières et ne sauraient en limiter la portée.

## Revendications

1. Dispositif de distribution portable pour l'administration de fluides destinés aux animaux comprenant un sac à dos (1) avec un compartiment principal (13) délimité par une paroi dorsale (10) destinée à venir en contact avec le dos d'un utilisateur, une paroi extérieure (11) agencée de manière opposée à la paroi dorsale et une paroi latérale (12) reliant les parois dorsale et extérieure, ainsi qu'une poche (4) souple contenant le fluide à administrer, placée dans ledit compartiment principal, au moins la partie de la paroi extérieure (11) du sac à dos en regard de ladite poche (4) est réalisée en une matière rigide pour former une protection anti-chocs, ladite poche étant fixée de manière amovible à la paroi dorsale (10) par au moins un moyen de fixation (15a à 15c ; 16) et **caractérisé en ce que** ladite poche (4) étant composée de quatre pièces, des faces avant et arrière avec deux soufflets latéraux de chaque côté de la poche et comportant de points de liaison entre les faces internes des soufflets, à l'extérieur de la poche, lesdits points de liaison constituant au moins une zone de rupture préférentielle (45a à 45d) de forme oblongue, le grand axe (450) de la ou de chacune desdites zones de rupture préférentielle étant orienté sensiblement perpendiculairement à un rayon passant par le centre de la poche et coupant cet axe.

2. Dispositif selon la revendication 1, dans lequel l'ensemble du sac à dos est réalisé en une matière rigide anti-chocs.

3. Dispositif selon la revendication 1 ou 2, dans lequel un moyen de fixation consiste en un système de sangles (15a à 15c) qui est prévu sur la paroi dorsale (10) du sac à dos pour la fixation de la poche contre la paroi dorsale.

4. Dispositif selon l'une des revendications 1 à 3, dans lequel la poche (4) comprend un orifice (410), délimité par une embase (41) comportant un système de raccordement (50) avec un clapet anti-retour et destiné à être raccordé à un tube flexible (40) pour la distribution du fluide, cet orifice (410) étant situé à proximité du fond (120) du sac à dos.

5. Dispositif selon l'une des revendications 1 à 4, dans lequel la poche (4) comporte un orifice (420), situé à proximité de la partie haute du sac à dos, cet orifice étant délimité par une embase (42) et fermé par un bouchon (43), des moyens de fixation (16) étant prévus sur la paroi dorsale du sac à dos pour suspendre la poche par coopération entre le bouchon et/ou l'embase et ces mayens.

6. Dispositif selon l'une des revendications 1 à 5, dans lequel la poche contient un produit sous vide.

7. Dispositif selon la revendication 6, dans lequel la poche et le produit qu'elle contient peuvent être stérilisés.

8. Dispositif selon l'une des revendications 1 à 7, dans lequel la poche contient un médicament à usage vétérinaire.

9. Dispositif selon l'une des revendications 1 à 8, dans lequel un compartiment secondaire (14) est prévu dans le compartiment principal (13), au niveau du fond (120) du sac à dos, dans lequel est placée ladite poche (4).

10. Utilisation d'un dispositif selon l'une quelconque des revendications 1 à 9 pour administrer un médicament à usage vétérinaire.

11. Utilisation selon la revendication 10, dans laquelle le traitement est appliqué en Pour On sur du bétail.

## Patentansprüche

1. Tragbare Ausgabevorrichtung zur Verabreichung von Fluiden an Tiere, umfassend einen Rucksack (1) mit einem Hauptfach (13), das durch eine Rückwand (10) begrenzt ist, die bestimmt ist, mit dem Rücken eines Benutzers in Kontakt zu kommen, eine Außenwand (11), die gegenüber der Rückwand ausgebildet ist, und eine Seitenwand (12), die die Rück- und Außenwand verbindet, sowie einen elastischen Beutel (4), der das zu verabreichende Fluid enthält, der im Hauptfach platziert ist, wobei mindestens der Teil der Außenwand (11) des Rucksacks gegenüber dem Beutel (4) aus einem starren Material hergestellt ist, um eine Stoßsicherungsschutz zu bilden, wobei der Beutel lösbar an der Rückwand (10) durch mindestens ein Befestigungsmittel (15a bis 15c; 16) befestigt ist und **dadurch gekennzeichnet, dass** der Beutel (4) aus vier Teilen, Vorder- und Rückseiten mit zwei seitlichen Bälgen auf jeder Seite des Beutels und aufweisend Verbindungspunkte zwischen den Innenseiten der Bälge außerhalb des Beutels zusammengesetzt ist, wobei die Verbindungspunkte mindestens einen bevorzugten Bruchbereich (45a bis 45d) länglicher Form bilden, wobei die große Achse (450) des oder jedes bevorzugten Bruchbereichs etwa senkrecht zu einem Radius zeigt, der durch das Zentrum des Beutels verläuft und diese Achse schneidet.

2. Vorrichtung nach Anspruch 1, wobei der gesamte Rucksack aus einem starren stoßgesicherten Material hergestellt ist.

3. Vorrichtung nach Anspruch 1 oder 2, wobei ein Befestigungsmittel aus einem Gurtsystem (15a bis 15c) besteht, das auf der Rückwand (10) des Rucksacks für die Befestigung des Beutels an der Rückwand vorgesehen ist.

4. Vorrichtung nach einem der Ansprüche 1 bis 3, wobei der Beutel (4) eine Öffnung (410) umfasst, begrenzt durch eine Basis (41), aufweisend ein Anschlusssystem (50) mit einem Rückschlagventil und bestimmt, mit einem Schlauch (40) für die Ausgabe des Fluids verbunden zu sein, wobei sich diese Öffnung (410) in der Nähe des Bodens (120) des Rucksacks befindet.

5. Vorrichtung nach einem der Ansprüche 1 bis 4, wobei der Beutel (4) eine Öffnung (420) aufweist, die sich in der Nähe des hohen Teils des Rucksacks befindet, wobei diese Öffnung von einer Basis (42) begrenzt ist und von einem Stopfen (43) verschlossen ist, wobei Befestigungsmittel (16) auf der Rückwand des Rucksacks vorgesehen sind, um den Beutel durch Zusammenwirken zwischen dem Stopfen und/oder der Basis und dieser Mittel aufzuhängen.

6. Vorrichtung nach einem der Ansprüche 1 bis 5, wobei der Beutel ein Produkt unter Vakuum enthält.

7. Vorrichtung nach Anspruch 6, wobei der Beutel und das Produkt, das er enthält, sterilisiert sein können.

8. Vorrichtung nach einem der Ansprüche 1 bis 7, wobei der Beutel ein Arzneimittel für die tierärztliche Anwendung enthält.

9. Vorrichtung nach einem der Ansprüche 1 bis 8, wobei ein sekundäres Fach (14) im Hauptfach (13) im Bereich des Bodens (120) des Rucksacks vorgesehen ist, in dem der Beutel (4) platziert ist.

10. Verwendung einer Vorrichtung nach einem der Ansprüche 1 bis 9 zur Verabreichung eines Arzneimittels für die tierärztliche Anwendung.

11. Verwendung nach Anspruch 10, wobei die Behandlung als Pour-On bei Vieh erfolgt.

## Claims

1. A portable dispensing device for administering fluids intended for animals comprising a backpack (1) with a main compartment (13) delimited by a back wall (10) intended to be in contact with the back of a user, an outer wall (11) laid out oppositely to the back wall and a side wall (12) connecting the back and outer walls, as well as a flexible pouch (4) containing the fluid to be administered, placed in said main compartment, at least the portion of the outer wall (11) of the backpack facing said pouch is made in a rigid material in order to form a shockproof protection, said pouch is removably attached to the back wall (10) with at least one attachment means (15a to 15c; 16), and **characterized in that** said pouch (4) consists of four parts, front and rear faces with two side bellows on each side of the pouch and includes connecting points between the internal faces of the bellows, outside the pouch, said connecting points forming at least one preferential breakage area (45a to 45d) of an oblong shape, the major axis (450) of each of said preferential breakage areas is oriented substantially perpendicularly to a ray passing through the center of the pouch and intercepting this axis.

2. The device according to claim 1, wherein the whole of the backpack is made in a shockproof rigid material.

3. The device according to claim 1 or 2, wherein an attachment means consist in a system of straps (15a to 15c) which is provided on the back wall (10) of the backpack for attaching the pouch against the back wall.

4. The device according to one of claims 1 to 3, wherein the pouch (4) comprises an orifice (410) delimited by a base (41) including a connecting system (50) with an anti-return valve and intended to be connected to a flexible tube (40) for dispensing fluid, this orifice (410) being located in proximity to the bottom (120) of the backpack.

5. The device according to one of claims 1 to 4, wherein the pouch (4) includes an orifice (420), located in proximity to the high portion of the backpack, this orifice being delimited by a base (42) and closed by a plug (43), attachment means (16) being provided on the back wall of the backpack in order to suspend the pouch by cooperation between the plug and/or the base and these means.

6. The device according to one of claims 1 to 5, wherein the pouch contains a product *in vacuo.*

7. The device according to claim 6, wherein the pouch and the product which it contains may be sterilized.

8. The device according to one of claims 1 to 7, wherein the pouch contains a drug for veterinary use.

9. The device according to one of claims 1 to 8, wherein a secondary compartment (14) is provided in the main compartment (13), at the bottom (120) of the backpack, in which is placed said pouch (4).

10. The use of a device according to any of claims 1 to 9 for administering a drug for veterinary use.

11. The use according to claim 10, wherein the treatment is applied as a pour-on on cattle.
